# EUROPEAN PATENT SPECIFICATION

(11) **EP 3 479 532 B1**
(45) Date of publication and mention of the grant of the patent: **15.07.2020**
(21) Application number: 16744405.8
(22) Date of filing: 27.07.2016
(51) Int. Cl.: H04L 12/715, G06F 9/455, H04L 29/06, H04L 12/713

(54) **A DATA PACKET FORWARDING UNIT IN SOFTWARE DEFINED NETWORKS**
EINHEIT ZUR WEITERLEITUNG VON DATENPAKETEN IN SOFTWAREDEFINIERTEN NETZWERKEN
UNITÉ DE RÉACHEMINEMENT DE PAQUETS DE DONNÉES DANS DES RÉSEAUX DÉFINIS PAR LOGICIEL

(43) Date of publication of application: 08.05.2019
(73) Proprietor: Huawei Technologies Co., Ltd., Longgang District Shenzhen, Guangdong 518129 (CN)
(72) Inventor: AN, Xueli, 80992 Munich (DE); MARQUEZAN, Clarissa, 80992 Munich (DE); VAISHNAVI, Ishan, 80992 Munich (DE); DESPOTOVIC, Zoran, 80992 Munich (DE); HECKER, Artur, 80992 Munich (DE)
(74) Representative: Kreuz, Georg Maria
(86) International application number: PCT/EP2016/067925
(87) International publication number: WO 2018/019370

(56) References cited:
- US-A1- 2015 139 238
- SASAKI TAKAYUKI ET AL: "Control-plane isolation and recovery for a secure SDN architecture", 2016 IEEE NETSOFT CONFERENCE AND WORKSHOPS (NETSOFT), IEEE, 6 June 2016 (2016-06-06), pages 459-464, XP032917873, DOI: 10.1109/NETSOFT.2016.7502485 [retrieved on 2016-06-30]
- "OpenFlow Switch Specification version 1.5.0", , 19 December 2014 (2014-12-19), XP055272239, Retrieved from the Internet: URL:https://www.opennetworking.org/images/ stories/downloads/sdn-resources/onf-specif ications/openflow/openflow-switch-v1.5.0.n oipr.pdf [retrieved on 2016-05-12]

## Description

### TECHNICAL FIELD

In general, the present invention relates to software defined networks. More specifically, the present invention relates to a data packet forwarding unit in software defined networks.

### BACKGROUND

In conventional networks, network forwarding elements like routers and switches contain data plane (D-plane) functions as well as control plane (C-plane) functions. Software defined networking (SDN) is an approach to network design and management that separates the control plane from the forwarding plane of the network and, thus, enables their independent handling. The control plane can be centralized so that the development of control plane protocols is simpler and faster. Software defined networking defines network devices as flow treatment devices, denoted as switches. On the basis of these switches, SDN can concentrate classical management and control plane intelligence in one logical device, which is also called a controller (also referred to as SDN controller). The common abstraction and the locally available data make developing control and management applications easier. Due to the centralization of the control plane, the network functions are moved to the controller, e.g. they can be implemented as control applications (cAPPs) running on the controller. For example, in routing, conventional switches run both link state distribution protocols and route (path) computation, while SDN enabled switches only distribute their link states to the controller and the controller performs path computation. These paths are used in switches by installing appropriate flow rules.

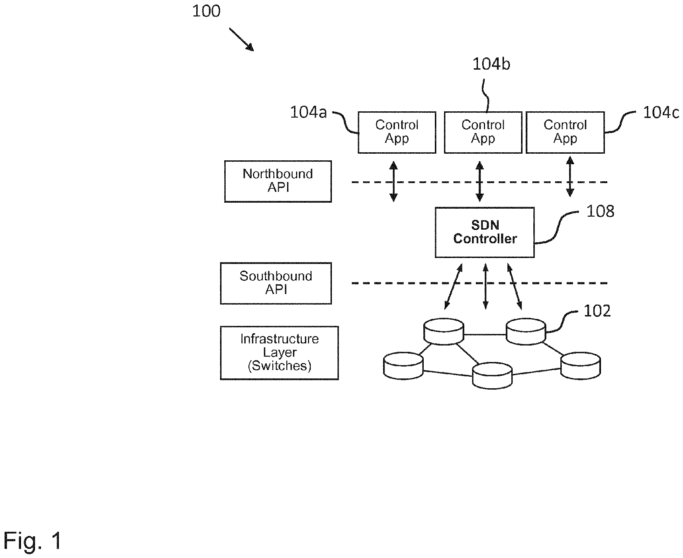

Figure 1 shows an illustration of an SDN architecture 100. In this network, the SDN controller 108 is one of the key components. By means of a so-called southbound application programming interface (i.e. Southbound API), the SDN controller 108 can communicate with the network elements in the infrastructure layer, namely a plurality of switches 102, and relay the necessary data to and from these switches 102 to build a centralized view of the network state. By means of the so-called "Northbound API", the SDN controller 108 can expose the centralized view to a plurality of SDN control applications 104a-c (i.e. SDN cAPPs running on the SDN controller 108), enabling these control applications 104a-c to execute their logic and manipulate the network state. The southbound API can be implemented using the OpenFlow (OF) protocol. The OF switch abstraction is the key assumption that the protocol makes and the concepts of a flow and a flow table lie at the heart of that abstraction. A flow is essentially any sequence of packets which share a common set of layer 2-layer 3 (L2-L3) protocol bits (e.g. packets destined to the same internet protocol (IP) address), while a flow table of a switch is a collection of all flows relevant to that switch. Each flow entry in a flow table is associated with a set of actions which should be executed when an input packet is matched to the flow entry. The communication channel between the SDN controller 108 and a switch 102 is usually called a control channel. It can be logically implemented as a transport layer security (TLS) or transmission control protocol (TCP) connection between the SDN controller 108 and the switch 102. Therefore, the term control connection is also used with the same meaning as control channel.

Software defined networking (more specifically OF-based SDN) is considered as one of the key technologies that can evolve next generation mobile network architecture design due to its simplicity and network programmability features (see, for instance, NGMN Alliance, "5G White Paper", Feb. 17, 2015). One of the aims of next generation mobile networks is to support a network slicing concept. Network slicing primarily targets a partition of the mobile core network, wherein a network slice is defined as a collection of resources from the SDN infrastructure and a set of control applications (cAPPs) that support the communication service requirements of a particular use, e.g. machine type communications (MTC), vehicle-to-X (V2X), mobile broad band (MBB), etc. For one network slice, there can be one or multiple SDN cAPPs, which can provide different network services. Resources from different slices can share the same SDN enabled infrastructure, and these slices might have different cAPPs with distinct requests to the SDN control plane in order to operate the infrastructure.

However, several problems need to be addressed in the context of network slices. Firstly, it has to be guaranteed that different slices, e.g., slice A and slice B, operating on top of the same infrastructure will have access only to their part of this infrastructure (e.g., flow entries in OpenFlow switches) and that slice A will not change portions of the infrastructure related to slice B. For instance, if the cAPP of slice A configures a flow entry in a switch S1, there should be a guarantee that a cAPP from slice B cannot modify the flow entry of slice A in the same switch S1.

Another problem is to guarantee that, even within the same slice, there can exist a domain of control for each of the cAPPs of the respective slice. For instance, in a scenario with the cAPP #1 (e.g. a mobility management cAPP) and the cAPP #2 (e.g. a connection management cAPP) from slice B cAPP #1 can define a set of flow entries in switch S1 to send events from the data plane to the control plane. There should, however, be mechanisms to guarantee that only cAPP #1 can enforce changes in these configurations (i.e., flow entries), thus not allowing cAPP #2 to change these configurations which may damage the operation of the cAPP #1.

In the document "FlowVisor: A Network Virtualization Layer", OpenFlow Switch Consortium, Tech. Rep, 2009, a virtualization solution named FlowVisor is suggested for sharing physical switches among different SDN control domains. This solution is based on a hypervisor layer. Each SDN control entity gets a slice of fully isolated network resources. FlowVisor is implemented as an OpenFlow proxy that intercepts and translates messages between the switches and controllers. However, this approach has several problems. Firstly, it does not allow access control among cAPPs within a single slice. Secondly, the additional layer between the controllers and switches adds extra control latency and overhead. Thirdly, it is unavoidable to increase control plane complexity by involving an additional layer in the control layer message processing.

In the document "An SDN virtualization architecture with flexible hypervisor function allocation", Integrated Network Management (IM), IFIP/IEEE International Symposium on, 11-15 May 2015, Blenk et al. propose a hypervisor to support multi-tenancy of control plane functionalities. This work focuses only on the control plane isolation. However, this approach does not solve the problem of resource sharing among the cAPPs on the same slice, and, similarly to the previously mentioned document, it is not efficient in terms of performance.

In US20150139238 A1, an approach for dynamically creating the flow entries in the switches that are associated with different slices or tenants is disclosed. However, this disclosure does not define which kind of access control is enforced to the deployed flow entries after their deployment. Therefore, there is no guarantee that another slice will override or delete the flow entry defined by another slice. Furthermore, it does not provide any mechanism that solves the problem of flow entry sharing among cAPPs of the same tenant.

In Takayuki Sasaki, et.al, "Control-plane Isolation and Recovery for a Secure SDN Architecture", a secure SDN architecture is described which includes a mechanism to partitioning of the control plane into isolated components to confine the damage of compromise, and a recovery mechanism to allow network components to be rolled back to a pristine state at regular intervals.

In OpenFlow Switch Specification version 1.5.0, the requirements of an OpenFlow logical switch is described, covering the components and the basic functions of the switch, and the OpenFlow switch protocol to mange an OpenFlow switch from a remote OpenFlow controller.

Thus, in light of the above there is a need for improved devices and methods for software defined networks.

### SUMMARY

It is an object of the invention to provide improved devices and methods for software defined networks.

The foregoing and other objects are achieved by the subject matter of the independent claims which define the present invention. Further implementation forms are apparent from the dependent claims, the description and the figures.

According to a first aspect, the invention relates to a data packet forwarding unit, in particular a switch, configured to forward data packets within a software defined network managed by an SDN controller on the basis of a set of data packet forwarding rules. The data packet forwarding unit comprises a storage unit, e.g., a memory configured to store the set of data packet forwarding rules and a set of access rules and an access control entity configured to control the access to the set of data packet forwarding rules on the basis of the set of access rules.

In a first possible implementation form of the data packet forwarding unit according to the first aspect as such, the access control entity is configured to control the access to the set of data packet forwarding rules by controlling the process of reading a data packet forwarding rule, writing a data packet forwarding rule and/or using a data packet forwarding rule of the set of data packet forwarding rules.

In a second possible implementation form of the data packet forwarding unit according to the first aspect as such or the first implementation form thereof, the data packet forwarding unit is configured to receive an SDN control message from an SDN controller for accessing the set of data packet forwarding rules, wherein the access control entity is configured to extract an identifier from the SDN control message, which identifies a control entity, and to control the access to the set of data packet forwarding rules on the basis of the set of access rules and the identifier.

In a third possible implementation form of the data packet forwarding unit according to the first aspect as such or the first or second implementation form thereof, the data packet forwarding unit is a switch implemented in accordance with the OpenFlow standard, wherein the set of data packet forwarding rules are stored in the storage unit in the form of a flow table, a group table, and/or a meter table.

In a fourth possible implementation form of the data packet forwarding unit according to the third implementation form of the first aspect, the set of access rules is stored in the form of extensions of the flow table, the group table, and/or the meter table.

In a fifth possible implementation form of the data packet forwarding unit according to the third or fourth implementation form of the first aspect, the access control entity is configured to check that a data packet forwarding rule stored in a flow table does not redirect a data packet to another data packet forwarding rule stored in a group table or a meter table, in case the data packet forwarding rule stored in the flow table and the other data packet forwarding rule stored in the group table or the meter table have conflicting access rules.

In a sixth possible implementation form of the data packet forwarding unit according to any one of the third to fifth implementation form of the first aspect, the access control entity is configured to control the access to the set of data packet forwarding rules by controlling the process of adding a new data packet forwarding rule to the set of data packet forwarding rules by checking whether the access rules of stored in the form of extensions of the flow table allow adding the new data packet forwarding rule to the set of data packet forwarding rules.

In a seventh possible implementation form of the data packet forwarding unit according to the sixth implementation form of the first aspect, the access control entity is configured to control the access to the set of data packet forwarding rules by controlling the process of adding a new data packet forwarding rule to the set of data packet forwarding rules by further checking whether the access rules stored in the form of extensions of the group table and/or the meter table allow adding the new data packet forwarding rule to the set of data packet forwarding rules, in case the access rules of stored in the form of extensions of the flow table allow adding the new data packet forwarding rule to the set of data packet forwarding rules.

In a eight possible implementation form of the data packet forwarding unit according to the first aspect as such or any one of the first to seven implementation form thereof, the set of access rules define for a respective data packet forwarding rule of the set of data packet forwarding rules a control entity as the owner of the respective data packet forwarding rule, other control entities, which are allowed to access the respective data packet forwarding rule, and/or access rights of the other control entities, which are allowed to access the respective data packet forwarding rule.

In an ninth possible implementation form of the data packet forwarding unit according to the eighth implementation form of the first aspect, the data packet forwarding unit is configured to receive an SDN control message from an SDN controller for creating a new data packet forwarding rule of the set of data packet forwarding rules and wherein the access control entity is configured to extract an identifier from the SDN control message, which identifies a control entity to be the owner of the new data packet forwarding rule.

In a tenth possible implementation form of the data packet forwarding unit according to the ninth implementation form of the first aspect, the access control entity is configured to decide whether to add a new data packet forwarding rule to the set of data packet forwarding rules or modify an existing data packet forwarding rule on the basis of the extracted identifier, which identifies the control entity.

In a eleventh possible implementation form of the data packet forwarding unit according to the first aspect as such or any one of the first to tenth implementation form thereof, the access control entity is configured to allow a predefined super control entity to access the whole set of data packet forwarding rules.

In an twelfth possible implementation form of the data packet forwarding unit according to the first aspect as such or any one of the first to eleventh implementation form thereof, the access control entity is further configured to discard an access request to the set of data packet forwarding rules which would result in an additional or modified data packet forwarding rule that overwrites an existing data packet forwarding rule.

According to a second aspect the invention relates to an SDN controller configured to control forwarding of data packets within a software defined network by providing a control message to a data packet forwarding unit, wherein the control message comprises a data packet forwarding rule and an identifier for identifying a control entity associated with the data packet forwarding unit.

In a first possible implementation form of the SDN controller according to the second aspect, the control message defines at least one other control entity, which is allowed to access the data packet forwarding rule, and/or access rights of the at least one other control entity.

According to a third aspect the invention relates to a method of operating a data packet forwarding unit configured to forward data packets within a software defined network on the basis of a set of data packet forwarding rules, wherein the method comprises the steps of:
accessing a set of access rules in a memory of the data packet forwarding unit; and
controlling the access to the set of data packet forwarding rules in the memory of the data packet forwarding unit on the basis of the set of access rules.

Further implementation forms of the method of operating a data packet forwarding unit according to the third aspect follow directly from the corresponding further implementation forms of the data packet forwarding unit according to the first aspect.

According to a fourth aspect the invention relates to a method of operating an SDN controller configured to control forwarding of data packets within a software defined network on the basis of a set of data packet forwarding rules, wherein the method comprises the step of sending a control message to a data packet forwarding unit, wherein the control message comprises a data packet forwarding rule and an identifier for identifying a control entity which generates the control message.

In a first possible implementation form of the method of operating an SDN controller according to the fourth aspect, the control message comprises an authorization filed which identifies control entities which are authorized to access the data packet forwarding rule.

Further, the control message may specify access right of each control identified entity.

According to a fifth aspect the invention relates to a method of operating a data packet forwarding unit configured to forward data packets within a software defined network on the basis of a set of data packet forwarding rules, wherein the method comprises the step of receiving a control message from a data packet forwarding unit, wherein the control message comprises a data packet forwarding rule and an identifier for identifying a control entity which generates the control message.

In a first possible implementation form of the method of operating data packet forwarding unit according to the fifth aspect, the control message comprises an authorization filed which identifies control entities which are authorized to access the data packet forwarding rule.

Further, the control message may specify access right of each control identified entity.

According to a sixth aspect, the invention relates to a computer program comprising program code for performing the method of the third aspect, the method of the fourth aspect, the method of the fifth aspect and/or any one of the further implementation forms thereof when executed on a computer.

### BRIEF DESCRIPTION OF THE DRAWINGS

Further embodiments of the invention will be described with respect to the following figures, wherein:
Fig. 1 shows a schematic diagram of an SDN architecture;
Fig. 2 shows a schematic diagram of an SDN architecture including a data packet forwarding unit according to an embodiment and an SDN controller according to an embodiment;
Fig. 3 shows a schematic diagram of an SDN architecture including a data packet forwarding unit according to an embodiment and an SDN controller according to an embodiment;
Fig. 4 shows a schematic diagram of an OpenFlow table entry extension implemented in an embodiment;
Fig. 5 shows a control message extension of an OpenFlow interface implemented in an embodiment;
Fig. 6 shows a control message extension of an OpenFlow interface implemented in an embodiment;
Fig. 7 shows a control message extension of an OpenFlow interface implemented in an embodiment;
Fig. 8 shows a data structure for authorization list implemented in an embodiment;
Fig. 9 shows an access control right list implemented in an embodiment;
Fig. 10 shows a flow chart for a process implemented in the access control entity of a data packet forwarding unit according to an embodiment;
Fig. 11 shows a schematic diagram of a tree structure for checking match rules implemented in a data packet forwarding unit according to an embodiment; and
Fig. 12 shows a schematic diagram of a method of operating a data packet forwarding unit according to an embodiment.

In the figures, identical reference signs will be used for identical or functionally equivalent features.

### DETAILED DESCRIPTION OF EMBODIMENTS

In the following description, reference is made to the accompanying drawings, which form part of the disclosure, and in which are shown, by way of illustration, specific aspects in which the present invention may be placed. It will be appreciated that the invention may be placed in other aspects and that structural or logical changes may be made without departing from the scope of the invention. The following detailed description, therefore, is not to be taken in a limiting sense, as the scope of the invention is defined by the appended claims.

For instance, it will be appreciated that a disclosure in connection with a described method will generally also hold true for a corresponding device or system configured to perform the method and vice versa. For example, if a specific method step is described, a corresponding device may include a unit to perform the described method step, even if such unit is not explicitly described or illustrated in the figures.

Moreover, in the following detailed description as well as in the claims, embodiments with functional blocks or processing units are described, which are connected with each other or exchange signals. It will be appreciated that the invention also covers embodiments which include additional functional blocks or processing units that are arranged between the functional blocks or processing units of the embodiments described below.

Finally, it is understood that the features of the various exemplary aspects described herein may be combined with each other, unless specifically noted otherwise.

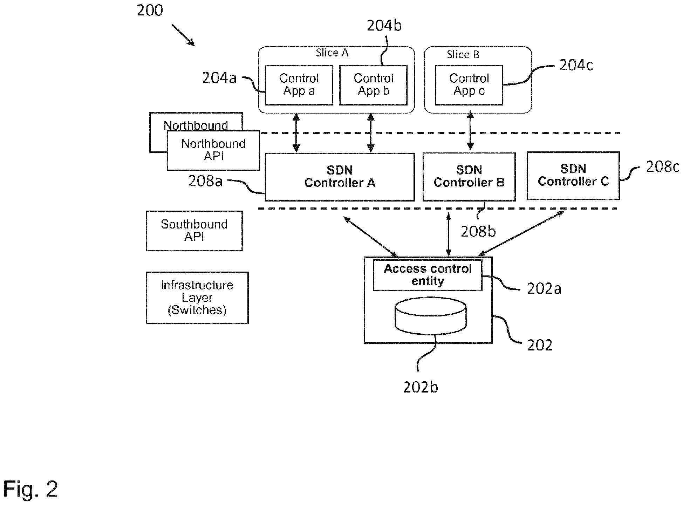

Figure 2 shows a schematic diagram of an SDN architecture 200 including a data packet forwarding unit 202 according to an embodiment and a plurality of SDN controllers 208a-c according to an embodiment. The data packet forwarding unit 202,which in an embodiment is implemented as an OpenFlow switch, is configured to forward data packets within respective software defined networks managed by the respective SDN controllers 208a-c on the basis of a respective set of data packet forwarding rules. The data packet forwarding unit 202 comprises a storage unit or memory 202b configured to store the respective sets of data packet forwarding rules as well as a respective set of access rules. Furthermore, the data packet forwarding unit 202 comprises an access control entity 202a configured to control the access to the respective set of data packet forwarding rules on the basis of the respective set of access rules. In an embodiment, the data packet forwarding unit 202 can communicate with the plurality of SDN controllers 208a-c via control channels using the OpenFlow (OF) protocol.

Two control applications 204a, i.e. Control App a, and 204b, i.e. Control App b, which can define at least part of a Slice A and/or a network function thereof, are implemented on the SDN controller A 208a. A control application 204c, i.e. Control App c, which can define at least part of a Slice B and/or a network function thereof, is implemented on the SDN controller B 208b.

Embodiments of the invention are based on an SDN based access-control model, wherein an SDN control entity (also referred to as a subject) can be an SDN controller X or the combination of an SDN controller X and an SDN cAPP y, which is herein denoted as X.y. For instance, in the embodiment shown in figure 2, an SDN control entity can be the controller C 208c, the controller A 208a together with cAPP a 204a or the controller B 208b together with cAPP c 204c. In an embodiment the access control entity 202a of the switch 202 can implement access rules such as "cAPPs from all slices on SDN controller X can modify the resource" or "only slice Y's cAPP y on SDN controller X can modify the resource".

Moreover, in an embodiment an object can be defined as one or more of the data packet forwarding rules, for instance, entries of flow/group/meter table of the switch 202, which can be accessed and specified by subjects. In an embodiment, a subject that first accesses and uses certain objects from the switch 202 has the ownership of this object. In an embodiment, the subject that has the ownership of an object can also authorize the access rights for other subjects.

In an embodiment, both the switch 202 and the SDN controller A 208a are configured to utilize the access control entity 202a of the switch 202. In an embodiment, a corresponding interface can be implemented between the SDN controller 208a and the OF switch 202, which can be used to specify access rules for the access control entity 202a. For instance, according to a set of access rules defining an access control policy all SDN cAPPs from slice A cannot use and/or modify the objects which belong to slice B.

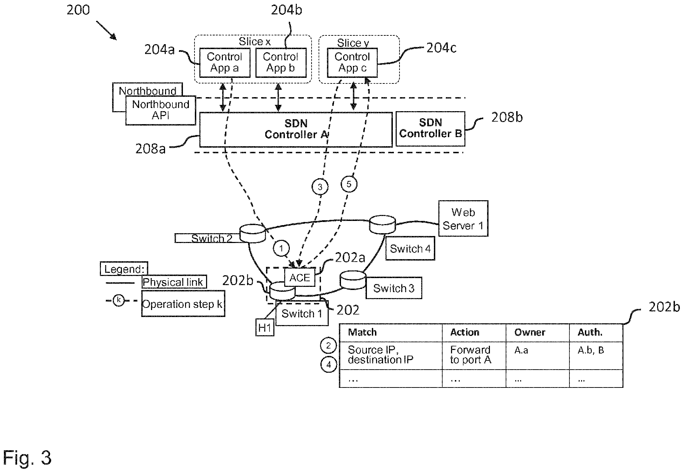

Figure 3 shows a schematic diagram of an SDN architecture 200 comprising a plurality switches, namely Switches 1-4, including the data packet forwarding unit 202 according to an embodiment (which in this case corresponds to Switch 1) as well as two SDN controllers 208a, b. In this embodiment, three different SDN control applications 204a-c, namely cAPPs a, b and c, from different slices, namely from slice x and from slice y, can access the switch 202 on the basis of the authorization and authentication implemented in the access control entity 202a of the switch 202. As already mentioned above, the access control entity 202a of the switch 202 enforces access control policies (defined by respective sets of access rules) over SDN control entity's access rights to perform operations (e.g. add, modify, delete) on infrastructure resources (which are the objects of the access control configuration).

In the embodiment shown in figure 3, the three SDN cAPPs a, b and c 204a-c implemented on the SDN controller A 208a can be denoted by A.a, A.b and A.c, wherein A.a and A.b are used for slice x and A.c is used for slice y. A host H1 is attached to the switch 202 and the host H1 tends to connect to a web server 1 by sending D-plane packets to the switch 202 with the destination address of the web server 1. As in this exemplary embodiment at this stage the switch 202 does not have any flow rules (i.e. data packet forwarding rules) to handle this traffic flow, a PI control message can be sent by the switch 202 to the SDN controller A 208a to request a data packet forwarding rule for handling this traffic. In an embodiment, the control entity cAPP a 204a that is implemented on the SDN controller A 208a can generate a data packet forwarding rule to handle this traffic originating from the host H1.

According to an embodiment, the following sequence of operation steps can be performed, which are indicated by the circled numbers in figure 3. In step 1, the cAPP a 204a sends a control message to the switch 202 to add a data packet forwarding rule to handle traffic from the host H1 to the web server 1. In step 2, once the control message is received by the switch 202, the access control entity (ACE) 202a of the switch 202 checks on the basis of the access rules stored in the storage unit or memory 202b if the corresponding control entity (i.e. the control application a 204a) has the necessary rights to add the data packet forwarding rule. The type of storage unit or memory 202b depends on the switch 202 implementation. It can be hardware memory, e.g. Ternary Content Addressable Memory (TCAM), or it can be virtualized memory for instance used by Open Virtual Switch (OVS). Other forms of storage units can also be used.

If this is the case, the data packet forwarding rule provided by the cAPP a 204a is installed on the switch 202 (i.e. stored on its memory 202b). Otherwise, the data packet forwarding rule provided by the cAPP a 204a is rejected by the access control entity 202a of the switch 202 and an error can be reported to the cAPP a 204a. In step 3, the cAPP c 204c generates another data packet forwarding rule and sends it to the switch 202 that may modify or delete the previous rule specified by the control entity A.a 204a. In step 4, the access control entity 202a of the switch 202 checks whether the control entity A.c 204c is authorized by the control entity A.a 204a for doing so. If this is not the case, the access control entity 202a of the of the switch 202 can reject the additional rule provided by the cAPP c 204c and returns an error message to the cAPP c 204c. An exemplary combination of data packet forwarding rules and access rules, which could be stored in the storage unit 202b of the switch, is shown in in a detailed view in the lower right of figure 3.

Advantageously, the embodiment shown in figure 3 does not require any kind of hypervisor based virtualization technology to guarantee access control on network slices. It is applied for control messages that intend to use and/or modify the resources of the switch 202. Therefore, different controllers 208a and 208b or cAPPs belonging to different slices can share the same switch 202 without interfering with each other. The access control entity 202a, embedded inside the switch 202, eliminates the need to virtualize the flow tables of the switch 202 to guarantee the isolation of the set of flow entries of each slice. Therefore, access control to the network slices at the resource level can be guaranteed independently if the switch is a dedicated OF hardware, or if the switch is a commodity of the shelf device using virtualized switches (e.g., OVS). This has a beneficial effect in Mobile Core Networks, because based on embodiments of the invention MCN operators can still have high performance dedicated hardware OF switches and guarantee the isolation among network slices.

Furthermore, the embodiment shown in figure 3 allows reducing the SDN control plane latency by eliminating a centralized control layer. Moreover, any kind of virtualization will necessarily affect the performance of the configuration of the resources in the network slice. Due to the fact that embodiments of the invention do not rely on virtualization techniques, the performance degradation for enabling access control and isolation of network slices is eliminated.

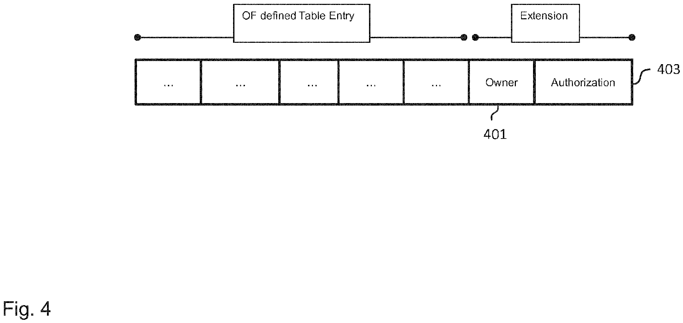

Figure 4 shows a schematic diagram of an OpenFlow table entry extension, which can be used in embodiments of the invention. The OpenFlow table entry can be stored in the memory 202b of the switch 202. In an embodiment, for OF switch 202 related objects (i.e. data packet forwarding rules, such as entries of a flow table, a group table and/or a meter table) two extension fields can be used, namely an owner field 401 and an authorization field 403. The extensions on the interfaces between the OF switch 202 and the SDN controller 208a allow the SDN controller 208a to define and programme the access control policies enforced at the OF switch 202. The extensions on the OF switches 202 enable the operations of the access control entity 202a of the OF switch 202 using the proposed dynamic and programmable access control solution according to this invention.

The owner field 401 defines the ownership of this object, which is pre-empted by a control entity related subject. For instance, a control entity that creates a table entry can be considered as the owner of this entry. Furthermore, a "super controller account" or super control entity can exist, which can modify all resources to recover the switch 202 in case of a faulty configuration, which is also called a root ownership. For example, a controller belonging to the infrastructure provider can have the root ownership. The root controller may also initially specify the list of controllers that are allowed to write to the switch 202. The ownership can be expressed as an ID, which can be composed in various ways. In one embodiment, the ID contains two fields, namely the controller ID and the cAPP ID. As already mentioned above, the ID for a cAPP x on the controller A 208a can be denoted as A.x. Control application IDs may be ignored (or using wildcard) to give rights to all control applications on top of a specific controller, e.g. A.*. By default, the owner is the control entity that installs the resource for the first time. This can be altered by the "super controller account" if it is necessary.

By using the authorization field 403, the owner of one table entry can authorize other control entities with certain access rights, as it will be explained in the following. The authorization can be done between different controllers (e.g. all the cAPPs implemented on the same controller have authorization amongst each other), or different slices (e.g. all the cAPPs belonging to the same slice have authorization amongst each other), or different cAPPs (e.g. authorization is done for individual pair of cAPPs). These two extension fields 401 and 403 are used to verify the access right of an SDN control message and it does not impact the data-plane packet processing.

As already mentioned above, in an embodiment the switch 202 is implemented as an OpenFlow (OF) switch. In the OF switch 202 there are three main tables that can be configured by the control entities and that can be extended using the extension fields 401, 403, namely a flow table, a group table, and/or a meter table.

A group table consists of group entries. Group table enables the ability for a flow entry to point to a group of ports which enables OpenFlow to represent additional methods of forwarding. A meter table consists of meter entries, which defines per-flow meters. Per-flow meters enable OpenFlow to implement various QoS operations, such as rate-limiting. It can also be combined with per-port queues to implement QoS frameworks (e.g. DiffServ). A meter measures the rate of packets assigned to it, therefore, it enables controlling the flow packet rate.

According to the OF standard the group and meter table are related to the flow table. In fact, when a data traffic packet arrives at the OF switch 202, it is first processed by the flow table, and instructions in this table can redirect the packet to the group table and/or to the meter table, as well as instructions in the group table can also redirect the data packet to the meter table. Thus, in an embodiment the access control entity 202a is configured to guarantee that an instruction of a flow table (or group table) can only redirect a packet to a group table or meter table with the same type of ownership and authorizations as the flow entry (or group entry) that started the redirection of a data packet. This is important to avoid that a flow entry of a slice A redirects the traffic to the meter entry of a slice B. Thus, in one embodiment, the access control for changing information in flow tables can be implemented in the following straightforward manner. If a first control entity is the owner of a flow entry in the switch 202 and a second control entity, which is neither the owner of this flow entry nor authorized to change it, tries to change the flow entry of the first control entity, this attempt can be detected and the second control entity can be stopped.

In the case of a group table and a meter table, it can happen that a control entity tries to reconfigure the entry and also that the access control for the usage of the group table and the meter table can be defined. In this case, if a first control entity owns a group table or meter table entry, it can use both group table and meter table entries. It can also authorize a second control entity to use the same group table or meter table entry. That is, in an embodiment a flow entry of the second control entity can only be linked to the group table or meter table entry of the first control entity if the second control entity also shares the ownership or is authorized (by the first control entity) to use the same group table or meter table entry.

Possible access rights for differently defined OF types of tables are listed in the following table 1.

| Access Right | Flow Table | Group Table | Meter Table |
|---|---|---|---|
| READ | Read the content of the flow entry. | Read the content of the group entry | Read the content of the meter entry |
| WRITE | Modify or delete the flow entry. | Modify or delete the group entry | Modify or delete the meter entry |
| USE | - | Use the group entry | Use the meter entry |

"READ" represents the access right that a subject can read the content of an entry from a flow, group and/or meter table, but it cannot modify the entry. "WRITE" represents the access right that a subject can read as well as modify or delete the content of an entry from a flow, group and/or meter table. For instance, if a control entity wants to install a new flow entry in a flow table of a switch, the access control entity checks if such entry (e.g. same matching field) already exists in the flow table. If yes, the access control entity checks if the control entity is the owner of the flow entry, and then the existing flow entry is updated based on the new flow entry. If the control entity is not the owner, but it is authorized by the owner with access right (WRITE), then the existing flow entry is updated based on the new flow entry.

"USE" represents the access right that a subject can use a group and/or meter table entry as indicated by the actions defined in a flow table entry. Therefore, "USE" does not apply to a flow table entry.

The combination of owner and authorization fields defines the access rule. Example usage could be, the owner of a flow entry is control entity 1, it authorizes control entity 2 with access right WRITE and control entity 3 with access right WRITE. Therefore, the access rule can be defined as [1, 2(WRITE), 3(WRITE)]. If this flow entry defines the actions, which use a group table entry. The owner of this group table entry is control entity 1, and 1 authorizes that control entity 3 with access right USE and control entity 4 with access right USE. Therefore, the access rule for this group table entry is [1, 3(WRITE, USE), 4(USE)]. If control entity 3 sends a control message to modify the above mentioned flow table entry, the access control entity first checks the access rule [1, 2(WRITE), 3(WRITE)], and then checks access rule [1, 3(WRITE, USE), 4(USE)]. These two access rules do not conflict with each other and, therefore, the control message from control entity 3 can be installed on the switch.

In case the group entry has access rule [1, 4(WRITE, USE), 6(USE)]and the following control message is received from the from control entity 3, [1, 2(WRITE), 3(WRITE)] and [1, 4(WRITE, USE), 6(USE)], then these access rules conflict with each other. Therefore, the control message from control entity 3 cannot be installed on the switch 202.

If control entity 5 sends a control message to modify the above mentioned flow table entry, the access control entity first checks the access rule [1, 2(WRITE), 3(WRITE)]. Control entity 5 is not authorized, therefore its rule cannot be installed on the switch.

For group/meter table, the possible combination of access rights could be:
[READ]: the authorized control entity can only read the group/meter table entry.
[WRITE]: the authorized control entity can modify the group/meter table entry. WRITE contains READ access right.
[USE]: the authorized control entity defined flow table entry can use the corresponding group/meter table entry. USE contains READ access right.
[WRITE, USE]: the authorized control entity defined flow table entry can use the corresponding group/meter table entry and the authorized control entity can modify the group/meter table entry.

In an embodiment, the owner of a group table entry can authorize a control entity to use the group table entry. This means that, if an instruction of a flow entry defines the action to process packets via a certain group entry, such group entry can only be used if the control entity (who owns the flow entry or is authorized therefor) is also authorized for the corresponding group entry. The same applies for the meter table. That is, only flow entries and group entries with the same access control can use (i.e., redirect data traffic) to the meter table. Checking the compatibility between flow entry and group or meter entry is done when a flow entry, i.e. data packet forwarding rule, is inserted in the switch 202. If the owner of the flow entry is not the owner or authorized by the owner to use the group or meter entry of the instruction set, the access control entity 202a rejects to add this flow entry and returns an error message.

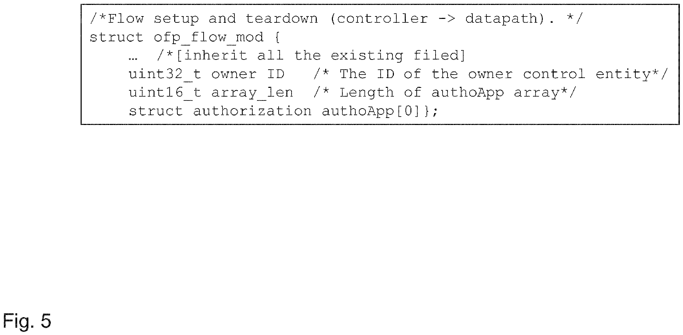

Figure 5 shows a control message extension of an OpenFlow interface according to an embodiment. In one embodiment there are two new fields added to the control message OFPT_FLOW_MOD, namely the owner control identity ID and the authorization list. These extensions of the control message are required by the OF interfaces which are based on the OpenFlow specification ("OpenFlow Switch Specification", Open Network Foundation (ONF), Version 1.5.0, Dec 19, 2014) in order to support the above mentioned features.

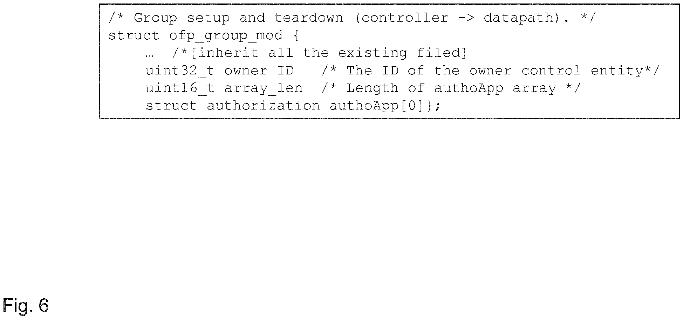

Figure 6 shows a control message extension of an OpenFlow interface according to an embodiment. Similarly to figure 5, in this embodiment there are two new fields added to the control message OFPT_GROUP_MOD, namely the owner control identity ID and the authorization list.

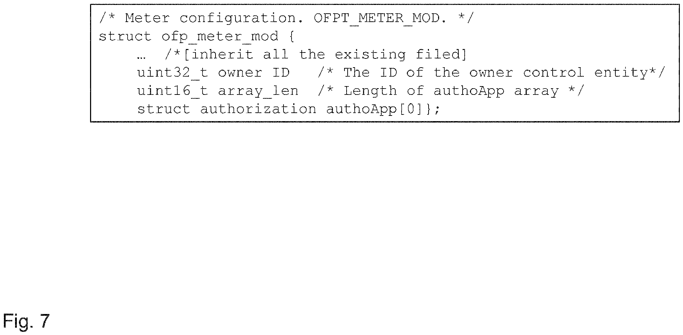

Figure 7 shows a control message extension of an OpenFlow interface according to an embodiment. Similarly to figures 5 and 6, in this embodiment there are two new fields added to the control message OFPT_METER_ MOD, namely the owner control identity ID and the authorization list.

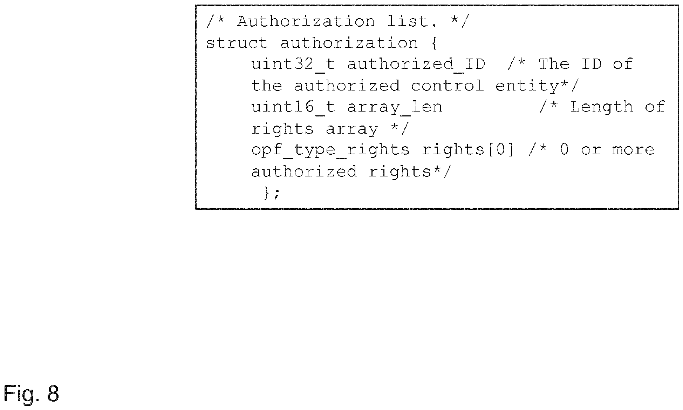

Figure 8 shows a possible data structure for an authorization list according to an embodiment. In this embodiment, the SDN control entity that generates the control message places its ID in the owner ID field.

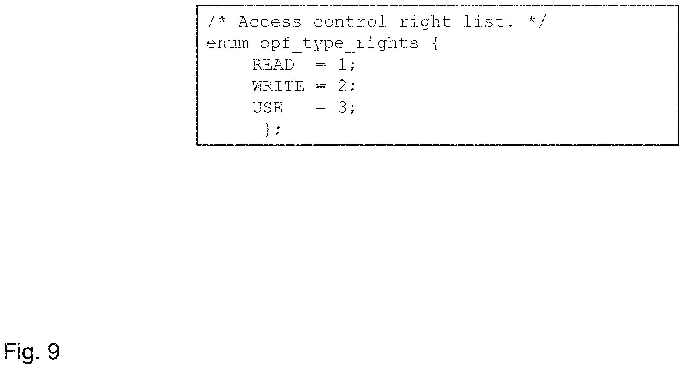

Figure 9 shows an access control right list according to an embodiment. In this embodiment, if an SDN control entity authorizes other control entities with access rights for READ, WRITE or USE, it puts these control entities and their corresponding access rights in the authorization field. If an entry is added by a control message without authorization field 403, no other control entity can access this entry other than the owner. For a control message that intends to modify or delete an entry, only the owner ID field 401 is used to check if the control entity that generates the control message is the owner or is authorized. The owner of a resource can transfer the ownership to another control entity by resetting the owner field and remove it from the authority list. Any control entity can modify a flow table by using a OFPT_TABLE_MOD message. It affects the flow entries with the same ownership, authorized with the WRITE right and the entries without any specific owner and authorization fields.

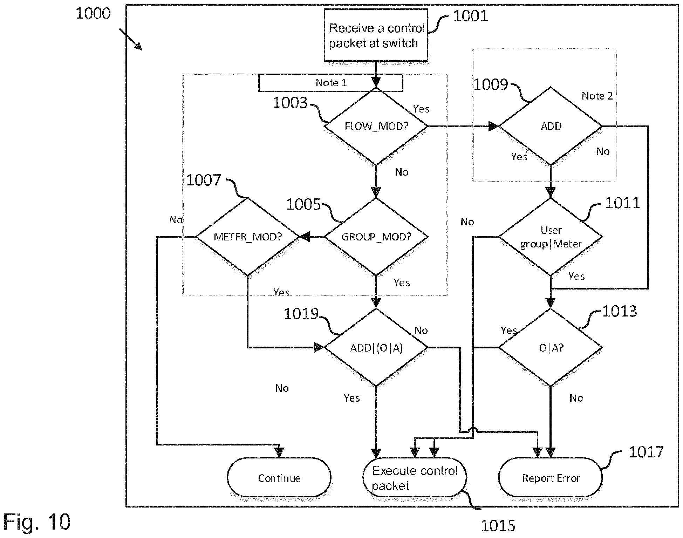

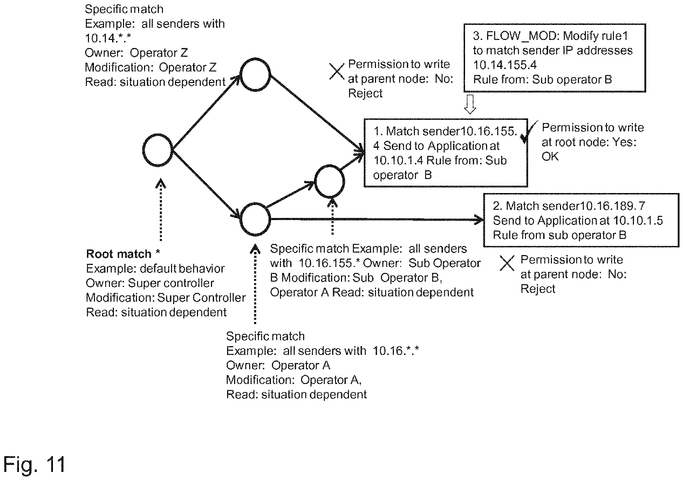

Figure 10 shows a flow chart of a process 1000 implemented in the access control entity 202a of the switch 202 according to an embodiment. In this embodiment, once an OF control packet is received by the switch 202 (step 1001), the access control entity 202a first checks the control packet type, to see if the control packet is a FLOW_MOD, GROUP_MOD or METER_MOD message (steps 1003, 1005, 1007). For a FLOW_MOD message, if it intends to add a new rule (step 1009), the access control entity 202a first checks if this flow entry can be added, which is explained in Figure 11. If yes, the access control entity 202a checks if this flow entry defines an action, which includes using any group or meter table. If yes, the access control entity 202a checks the ownership field or the authentication field (O|A) in the corresponding entry of the group table or meter table(steps 1009, 1011, 1013). If yes, then this new rule will be added to the data packet forwarding rules of the switch 202 (step 1015), otherwise, an error is reported back to the SDN cAPP that has generated the FLOW_MOD message (step 1017).

If the FLOW_MOD message is used to modify a flow entry, the access control entity 202a checks if the SDN cAPP that generates this FLOW_MOD message has the ownership or is authorized by the owner of this flow(step 1013). If yes, then this flow will be modified (step 1015), otherwise, an error message is reported back to the SDN cAPP (step 1017). If the control packet is a GROUP_MOD or a METER_MOD message, the access control entity 202a checks the ownership field or the authentication field (O|A) in the corresponding entry of the group table or meter table, to see if the SDN cAPP that has generated the control message has the ownership or is authorized by the owner of this group or meter table entry that it intends to modify (step 1019). If this is the case, this set of flow rules will be modified (step 1015), otherwise, an error is reported back to the SDN cAPP (step 1017).

As illustrated by note 1 in the figure, the sequence of control packet type determination or the way to determine the type of control packet can be flexible. As illustrated by note 2, in an embodiment a rule shadowing can be further tested here before to install on the switch 102a, wherein the rule shadowing denotes the process by which an application could write a subset of match rules, in case it cannot directly write to the superset match. For example, an application "A" does not have the right to write matching rules in the address spaces 192.168.155.0/24. However, it can theoretically overcome this restriction by writing a large number of rules for the address space 192.168.155.XXX, where XXX is from 1 to 254. Since normal functioning of OF prioritizes the longest match, these subsets of flow rules would hide the overall set of flow rules.

An advantage of this invention is that the mechanisms to guarantee access rights to configure the switch 202 itself are enforced inside the switch 202, which is the object managed by the access control entity 202a. As a consequence, even if the controller 208a and the hypervisor have security mechanisms to check if cAPPs can submit OF messages to change the flow entries of the switches (i.e., send OF FLOW_MOD messages), current OF switches themselves have no mechanism to double check if a flow entry should really be changed by a received OF message. This invention introduces this double checking security capability inside the OF switch 202. Once a flow entry is installed by the first time inside a OF switch 202 using the above mentioned approach, then it can be guaranteed that only FLOW_MOD messages which conform to the access control rights inside the installed flow entry will be actually allowed to reconfigure such flow entry. Therefore, this invention adds an extra security mechanism inside the switch 202 to guarantee the access control to the switch resources of each network slice and within such slices.

Figure 11 shows a schematic diagram of a tree structure for checking matching rules, which can be implemented in embodiments of the invention and which can be used to address the rule shadowing problem. As already mentioned above, the rule shadowing problem can occur, when a cAPP A defines a generic rule (i.e., a flow entry in a OF switch) in the switch 202 and the cAPP B defines a narrower specific rule in the same switch 202, thereby overriding the cAPP A rule. In this case the cAPP B can keep installing rules (i.e. flow entries) in the switch 202 rules, until the entire cAPP A space of the generic rule is covered by the new specific rules installed by cAPP B in the switch 202. As a consequence thereof, the operation of cAPP A will be kicked out of the switch 202. This is a serious problem because cAPP A, from its control point of view, "believes" that everything is working properly in the data plane. However, the data plane rules of cAPP A are simply ignored and the traffic that should be treated by cAPP A rules will be actually treated by the rules of cAPP B. If cAPP A and cAPP B belong to the same slice, this rule shadowing happens at least with traffic related to the same slice. However, when these cAPPs belong to different slices, this can result in serious problems of lack of slice isolation, mistreatment of traffic, and wrong usage of slice resources.

In the embodiment of figure 11, the root nodes are subset match rules (more specific match rules) of the parent match rule. In an embodiment, the permissions defined for the parent automatically apply to the root node (similar to a Linux directory structure tree). The parent match *.* is owned by the root controller, which is in turn owned by the system administrator. Only the root controller can assign the initial set of permissions to various other controllers and/or applications at the first layer. Further matches can then be added by the owner of those first layers within the match supersets where they are granted permission. According to an embodiment, it checks if the matching field of incoming flow rule is a subset of any existing flow entry, e.g. using an OFPFF_CHECK _OVERLAP flag. If OFPFF_CHECK_OVERLAP = 1, it checks if the owner of incoming flow rule is authorized. If the owner is authorized, then a flow rule can be added. Otherwise, an error is reported. If OFPFF_CHECK_OVERLAP = 0, then a flow rule can be added. However, differently from a Linux directory structure, in this case a node could have two parents. Namely, it would need authority from both parental nodes to be successfully provisioned.

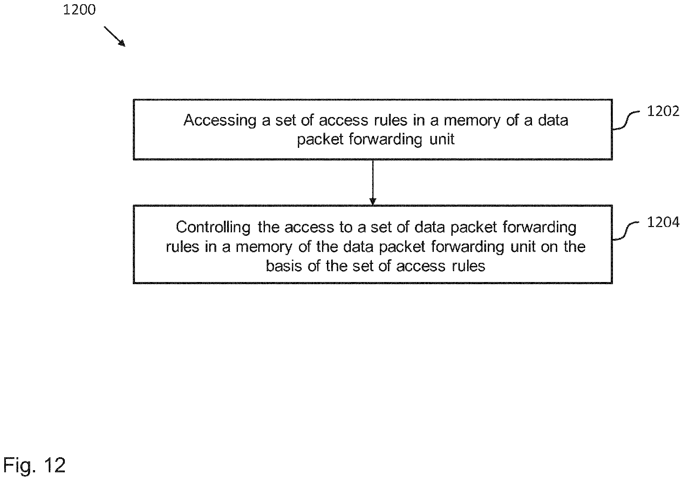

Figure 12 shows a schematic diagram of a method 1200 of operating the data packet forwarding unit 202 configured to forward data packets within a software defined network.

The method 1200 comprises the steps of accessing 1202 a set of access rules in the memory 202b of the data packet forwarding unit 202 and controlling 1204 the access to the set of data packet forwarding rules in the memory 202b of the data packet forwarding unit 202 on the basis of the set of access rules.

While a particular feature or aspect of the disclosure may have been disclosed with respect to only one of several implementations or embodiments, such feature or aspect may be combined with one or more other features or aspects of the other implementations or embodiments as may be desired and advantageous for any given or particular application. Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless whether they are in direct physical or electrical contact, or they are not in direct contact with each other.

Although specific aspects have been illustrated and described herein, it will be appreciated by those of ordinary skill in the art that a variety of alternate and/or equivalent implementations may be substituted for the specific aspects shown and described without departing from the scope of the present disclosure. This application is intended to cover any adaptations or variations of the specific aspects discussed herein.

Although the elements in the following claims are recited in a particular sequence with corresponding labeling, unless the claim recitations otherwise imply a particular sequence for implementing some or all of those elements, those elements are not necessarily intended to be limited to being implemented in that particular sequence.

Many alternatives, modifications, and variations will be apparent to those skilled in the art in light of the above teachings. Of course, those skilled in the art readily recognize that there are numerous applications of the invention beyond those described herein. While the present invention has been described with reference to one or more particular embodiments, those skilled in the art recognize that many changes may be made thereto without departing from the scope of the present invention. It is therefore to be understood that within the scope of the appended claims and their equivalents, the invention may be practiced otherwise than as specifically described herein.

## Claims

1. A data packet forwarding unit (202) configured to forward data packets within a software defined network on the basis of a set of data packet forwarding rules, wherein the data packet forwarding unit (202) comprises:
a storage unit (202b) configured to store the set of data packet forwarding rules and a set of access rules; and
an access control entity (202a) configured to control the access to the set of data packet forwarding rules on the basis of the set of access rules;
wherein each access rule of the set of access rules comprises an owner field and an authorization field in an Software Defined Network, SDN, control message.

2. The data packet forwarding unit (202) of claim 1, wherein the access control entity (202a) is configured to control the access to the set of data packet forwarding rules by controlling the process of reading a data packet forwarding rule, writing a data packet forwarding rule and/or using a data packet forwarding rule of the set of data packet forwarding rules.

3. The data packet forwarding unit (202) of claim 1 or 2, wherein the data packet forwarding unit (202) is configured to receive the SDN control message from an SDN controller (208a-c) for accessing the set of data packet forwarding rules and wherein the access control entity (202a) is configured to extract an identifier from the SDN control message, which identifies a control entity, and to control the access to the set of data packet forwarding rules on the basis of the set of access rules and the identifier.

4. The data packet forwarding unit (202) of any one of the preceding claims, wherein the data packet forwarding unit (202) is a switch (202) implemented in accordance with the OpenFlow standard and wherein the set of data packet forwarding rules are stored in the storage unit (202b) in the form of a flow table, a group table, and/or a meter table.

5. The data packet forwarding unit (202) of claim 4, wherein the access control entity (202a) is configured to check that a data packet forwarding rule stored in a flow table does not redirect a data packet to another data packet forwarding rule stored in a group table or a meter table, in case the data packet forwarding rule stored in the flow table and the other data packet forwarding rule stored in the group table or the meter table have conflicting access rules.

6. The data packet forwarding unit (202) of any one of claims 4 to 5, wherein the access control entity (202b) is configured to control the access to the set of data packet forwarding rules by controlling the process of adding a new data packet forwarding rule to the set of data packet forwarding rules by checking whether the access rules stored in the form of extensions of the flow table allow adding the new data packet forwarding rule to the set of data packet forwarding rules

7. The data packet forwarding unit (202) of claim 6, wherein the access control entity (202b) is configured to control the access to the set of data packet forwarding rules by controlling the process of adding a new data packet forwarding rule to the set of data packet forwarding rules by further checking whether the access rules stored in the form of extensions of the group table and/or the meter table allow adding the new data packet forwarding rule to the set of data packet forwarding rules, in case the access rules stored in the form of extensions of the flow table allow adding the new data packet forwarding rule to the set of data packet forwarding rules.

8. The data packet forwarding unit (202) of any one of the preceding claims, wherein the set of access rules define, for a respective data packet forwarding rule of the set of data packet forwarding rules,
a control entity as the owner of the respective data packet forwarding rule,
other control entities, which are allowed to access the respective data packet forwarding rule, and/or
access rights of the other control entities, which are allowed to access the respective data packet forwarding rule.

9. The data packet forwarding unit (202) of claim 8, wherein the data packet forwarding unit (202) is configured to receive the SDN control message from an SDN controller (208a-c) for creating a new data packet forwarding rule of the set of data packet forwarding rules and wherein the access control entity (202a) is configured to extract an identifier from the SDN control message, which identifies a control entity to be the owner of the new data packet forwarding rule.

10. The data packet forwarding unit (202) of claim 9, wherein the access control entity (202) is configured to decide whether to add a new data packet forwarding rule to the set of data packet forwarding rules or modify an existing data packet forwarding rule on the basis of the extracted identifier, which identifies the control entity.

11. An Software Defined Network, SDN, controller (208a-c) configured to control forwarding of data packets within a software defined network by providing a control message to a data packet forwarding unit (202), wherein the control message comprises a data packet forwarding rule, an identifier for identifying a control entity to be the owner of the data packet forwarding rule and an authorization list.

12. The SDN controller (208a-c) of claim 11, wherein the control message defines at least one other control entity, which is allowed to access the data packet forwarding rule, and/or access rights of the at least one other control entity.

13. A method of operating an SDN controller (208a-c) configured to control forwarding of data packets within a software defined network on the basis of a set of data packet forwarding rules, wherein the method comprises the step of:
sending a control message to a data packet forwarding unit (202);
wherein the control message comprises a data packet forwarding rule, an identifier for identifying a control entity to be the owner of the data packet forwarding rule and an authorization list.

14. A method of operating a data packet forwarding unit (202) configured to forward data packets within a software defined network on the basis of a set of data packet forwarding rules, wherein the method comprises the step of:
receiving a control message from a data packet forwarding unit (202), wherein the control message comprises a data packet forwarding rule and an identifier for identifying a control entity which generates the control message; and
controlling access to the set of data packet forwarding rules on the basis of a set of access rules and the identifier;
wherein each access rule of the set of access rules comprises an owner field and an authorization field in an Software Defined Network, SDN, control message.

15. A computer program comprising program code for performing the method of claim 13, or 14, when executed on a computer.

## Patentansprüche

1. Datenpaket-Weiterleitungseinheit (202), die dazu ausgebildet ist, Datenpakete innerhalb eines softwaredefinierten Netzwerks auf der Grundlage eines Satzes von Datenpaket-Weiterleitungsregeln weiterzuleiten, wobei die Datenpaket-Weiterleitungseinheit (202) Folgendes umfasst:
eine Speichereinheit (202b), die dazu ausgebildet ist, den Satz von Datenpaket-Weiterleitungsregeln und einen Satz von Zugriffsregeln zu speichern; und
ein Zugriffssteuerelement (202a), das dazu ausgebildet ist, den Zugriff auf den Satz von Datenpaket-Weiterleitungsregeln auf der Grundlage des Satzes von Zugriffsregeln zu steuern;
wobei jede Zugriffsregel des Satzes von Zugriffsregeln ein Eigentümerfeld und ein Autorisierungsfeld in einer Steuernachricht eines softwaredefinierten Netzwerks, SDN, umfasst.

2. Datenpaket-Weiterleitungseinheit (202) nach Anspruch 1, wobei das Zugriffsteuerelement (202a) dazu ausgebildet ist, den Zugriff auf den Satz von Datenpaket-Weiterleitungsregeln durch Steuerung des Prozesses des Lesens einer Datenpaket-Weiterleitungsregel, Schreibens einer Datenpaket-Weiterleitungsregel und/oder Nutzens einer Datenpaket-Weiterleitungsregel des Satzes von Datenpaket-Weiterleitungsregeln zu steuern.

3. Datenpaket-Weiterleitungseinheit (202) nach Anspruch 1 oder 2, wobei die Datenpaket-Weiterleitungseinheit (202) dazu ausgebildet ist, die SDN-Steuernachricht von einer SDN-Steuerung (208a-c) zum Zugriff auf den Satz von Datenpaket-Weiterleitungsregeln zu empfangen, und wobei das Zugriffssteuerelement (202a) dazu ausgebildet ist, eine Kennung aus der SDN-Steuernachricht zu extrahieren, die ein Steuerelement identifiziert, und den Zugriff auf den Satz von Datenpaket-Weiterleitungsregeln auf der Grundlage des Satzes von Zugriffsregeln und der Kennung zu steuern.

4. Datenpaket-Weiterleitungseinheit (202) nach einem der vorhergehenden Ansprüche, wobei die Datenpaket-Weiterleitungseinheit (202) ein "Switch" (202) ist, der gemäß dem OpenFlow-Standard implementiert ist, und wobei der Satz von Datenpaket-Weiterleitungsregeln in der Speichereinheit (202b) in Form einer "Flow"-Tabelle, einer Gruppentabelle und/oder einer "Meter"-Tabelle gespeichert ist.

5. Datenpaket-Weiterleitungseinheit (202) nach Anspruch 4, wobei das Zugriffssteuerelement (202a) dazu ausgebildet ist, zu prüfen, dass eine Datenpaket-Weiterleitungsregel, die in einer "Flow"-Tabelle gespeichert ist, ein Datenpaket nicht zu einer anderen Datenpaket-Weiterleitungsregel umleitet, die in einer Gruppentabelle oder einer "Meter"-Tabelle gespeichert ist, falls die Datenpaket-Weiterleitungsregel, die in der "Flow"-Tabelle gespeichert ist, und die andere Datenpaket-Weiterleitungsregel, die in der Gruppentabelle oder der "Meter"-Tabelle gespeichert ist, in Konflikt stehende Zugriffsregeln aufweisen.

6. Datenpaket-Weiterleitungseinheit (202) nach einem der Ansprüche 4 bis 5, wobei das Zugriffssteuerelement (202b) dazu ausgebildet ist, den Zugriff auf den Satz von Datenpaket-Weiterleitungsregeln zu steuern, indem der Prozess des Hinzufügens einer neuen Datenpaket-Weiterleitungsregel zu dem Satz von Datenpaket-Weiterleitungsregeln gesteuert wird, indem geprüft wird, ob die Zugriffsregeln, die in Form von Erweiterungen der "Flow"-Tabelle gespeichert sind, Hinzufügen der neuen Datenpaket-Weiterleitungsregel zu dem Satz von Datenpaket-Weiterleitungsregeln erlauben.

7. Datenpaket-Weiterleitungseinheit (202) nach Anspruch 6, wobei das Zugriffssteuerelement (202b) dazu ausgebildet ist, den Zugriff auf den Satz von Datenpaket-Weiterleitungsregeln zu steuern, indem der Prozess des Hinzufügens einer neuen Datenpaket-Weiterleitungsregel zu dem Satz von Datenpaket-Weiterleitungsregeln gesteuert wird, indem weiter geprüft wird, ob die Zugriffsregeln, die in Form von Erweiterungen der Gruppentabelle und/oder der "Meter"-Tabelle gespeichert sind, Hinzufügen der neuen Datenpaket-Weiterleitungsregel zu dem Satz von Datenpaket-Weiterleitungsregeln erlauben, falls die Zugriffsregeln, die in Form von Erweiterungen der "Flow"-Tabelle gespeichert sind, Hinzufügen der neuen Datenpaket-Weiterleitungsregel zu dem Satz von Datenpaket-Weiterleitungsregeln erlauben.

8. Datenpaket-Weiterleitungseinheit (202) nach einem der vorhergehenden Ansprüche, wobei der Satz von Zugriffsregeln für eine jeweilige Datenpaket-Weiterleitungsregel des Satzes von Datenpaket-Weiterleitungsregeln Folgendes definiert:
ein Steuerelement als der Eigentümer der jeweiligen Datenpaket-Weiterleitungsregel,
andere Steuerelemente, denen es erlaubt ist, auf die jeweilige Datenpaket-Weiterleitungsregel zuzugreifen,
und/oder
Zugriffsrechte der anderen Steuerelemente, denen es erlaubt ist, auf die jeweilige Datenpaket-Weiterleitungsregel zuzugreifen.

9. Datenpaket-Weiterleitungseinheit (202) nach Anspruch 8, wobei die Datenpaket-Weiterleitungseinheit (202) dazu ausgebildet ist, die SDN-Steuernachricht von einer SDN-Steuerung (208a-c) zur Erstellung einer neuen Datenpaket-Weiterleitungsregel des Satzes von Datenpaket-Weiterleitungsregeln zu empfangen, und wobei das Zugriffssteuerelement (202a) dazu ausgebildet ist, eine Kennung aus der SDN-Steuernachricht zu extrahieren, die ein Steuerelement identifiziert, das der Eigentümer der neuen Datenpaket-Weiterleitungsregel sein soll.

10. Datenpaket-Weiterleitungseinheit (202) nach Anspruch 9, wobei das Zugriffssteuerelement (202) dazu ausgebildet ist, zu entscheiden, ob eine neue Datenpaket-Weiterleitungsregel dem Satz von Datenpaket-Weiterleitungsregeln hinzugefügt oder eine bestehende Datenpaket-Weiterleitungsregel auf der Grundlage der extrahierten Kennung, die das Steuerelement identifiziert, geändert werden soll.

11. Steuerung (208a-c) für ein softwaredefiniertes Netzwerk, SDN, die dazu ausgebildet ist, eine Weiterleitung von Datenpaketen innerhalb eines softwaredefinierten Netzwerks durch Bereitstellen einer Steuernachricht an eine Datenpaket-Weiterleitungseinheit (202) zu steuern, wobei die Steuernachricht eine Datenpaket-Weiterleitungsregel, eine Kennung zur Identifizierung eines Steuerelements, das der Eigentümer der Datenpaket-Weiterleitungsregel sein soll, und eine Autorisierungsliste umfasst.

12. SDN-Steuerung (208a-c) nach Anspruch 11, wobei die Steuernachricht mindestens ein anderes Steuerelement, dem es erlaubt ist, auf die Datenpaket-Weiterleitungsregel zuzugreifen, und/oder Zugriffsrechte des mindestens einen anderen Steuerelements definiert.

13. Verfahren zum Betrieb einer SDN-Steuerung (208a-c), die dazu ausgebildet ist, eine Weiterleitung von Datenpaketen innerhalb eines softwaredefinierten Netzwerks auf der Grundlage eines Satzes von Datenpaket-Weiterleitungsregeln zu steuern, wobei das Verfahren den folgenden Schritt umfasst:
Senden einer Steuernachricht an eine Datenpaket-Weiterleitungseinheit (202);
wobei die Steuernachricht eine Datenpaket-Weiterleitungsregel, eine Kennung zur Identifizierung eines Steuerelements, das der Eigentümer der Datenpaket-Weiterleitungsregel sein soll, und eine Autorisierungsliste umfasst.

14. Verfahren zum Betrieb einer Datenpaket-Weiterleitungseinheit (202), die dazu ausgebildet ist, Datenpakete innerhalb eines softwaredefinierten Netzwerks auf der Grundlage eines Satzes von Datenpaket-Weiterleitungsregeln weiterzuleiten, wobei das Verfahren den folgenden Schritt umfasst:
Empfangen einer Steuernachricht von einer Datenpaket-Weiterleitungseinheit (202),
wobei die Steuernachricht eine Datenpaket-Weiterleitungsregel und eine Kennung zur Identifizierung eines Steuerelements, das die Steuernachricht erzeugt, umfasst; und
Steuern des Zugriffs auf den Satz von Datenpaket-Weiterleitungsregeln auf der Grundlage eines Satzes von Zugriffsregeln und der Kennung;
wobei jede Zugriffsregel des Satzes von Zugriffsregeln ein Eigentümerfeld und ein Autorisierungsfeld in einer Steuernachricht eines softwaredefinierten Netzwerks, SDN, umfasst.

15. Computerprogramm umfassend Programmcode zur Durchführung des Verfahrens nach Anspruch 13 oder 14, wenn es auf einem Computer ausgeführt wird.

## Revendications

1. Unité de réacheminement de paquets de données (202) configurée pour réacheminer des paquets de données dans un réseau défini par logiciel sur la base d'un ensemble de règles de réacheminement de paquets de données, l'unité de réacheminement de paquets de données (202) comprenant :
une unité de stockage (202b) configurée pour stocker l'ensemble de règles de réacheminement de paquets de données et un ensemble de règles d'accès ; et
une entité de commande d'accès (202a) configurée pour commander l'accès à l'ensemble de règles de réacheminement de paquets de données sur la base de l'ensemble de règles d'accès ;
chaque règle d'accès de l'ensemble de règles d'accès comprenant un champ de propriétaire et un champ d'autorisation dans un message de commande de réseau défini par logiciel, SDN.

2. Unité de réacheminement de paquets de données (202) selon la revendication 1, l'entité de commande d'accès (202a) étant configurée pour commander l'accès à l'ensemble de règles de réacheminement de paquets de données en commandant le processus de lecture d'une règle de réacheminement de paquets de données, en écrivant une règle de réacheminement de paquets de données et/ou en utilisant une règle de réacheminement de paquets de données de l'ensemble de règles de réacheminement de paquets de données.

3. Unité de réacheminement de paquets de données (202) selon la revendication 1 ou 2, l'unité de réacheminement de paquets de données (202) étant configurée pour recevoir le message de commande de SDN en provenance d'un dispositif de commande de SDN (208a-c) pour accéder à l'ensemble de règles de réacheminement de paquets de données et l'entité de commande d'accès (202a) étant configurée pour extraire un identifiant du message de commande de SDN qui identifie une entité de commande, et pour commander l'accès à l'ensemble de règles de réacheminement de paquets de données sur la base de l'ensemble de règles d'accès et de l'identifiant

4. Unité de réacheminement de paquets de données (202) selon l'une quelconque des revendications précédentes, l'unité de réacheminement de paquets de données (202) étant un commutateur (202) mis en œuvre conformément à la norme OpenFlow et l'ensemble de règles de réacheminement de paquets de données étant stocké dans l'unité de stockage (202b) sous la forme d'une table de flux, d'une table de groupe et/ou d'une table de mesure.

5. Unité de réacheminement de paquets de données (202) selon la revendication 4, l'entité de commande d'accès (202a) étant configurée pour vérifier qu'une règle de réacheminement de paquets de données stockée dans une table de flux ne redirige pas un paquet de données vers une autre règle de réacheminement de paquets de données stockée dans une table de groupe ou une table de mesure, dans le cas où la règle de réacheminement de paquets de données stockée dans la table de flux et l'autre règle de réacheminement de paquets de données stockée dans la table de groupe ou la table de mesure ont des règles d'accès contradictoires.

6. Unité de réacheminement de paquets de données (202) selon l'une quelconque des revendications 4 et 5, l'entité de commande d'accès (202b) étant configurée pour commander l'accès à l'ensemble de règles de réacheminement de paquets de données en commandant le processus d'ajout d'une nouvelle règle de réacheminement de paquets de données à l'ensemble de règles de réacheminement de paquets de données en vérifiant si les règles d'accès stockées sous la forme d'extensions de la table de flux permettent d'ajouter la nouvelle règle de réacheminement de paquets de données à l'ensemble de règles de réacheminement de paquets de données.

7. Unité de réacheminement de paquets de données (202) selon la revendication 6, l'entité de commande d'accès (202b) étant configurée pour commander l'accès à l'ensemble de règles de réacheminement de paquets de données en commandant le processus d'ajout d'une nouvelle règle de réacheminement de paquets de données à l'ensemble de règles de réacheminement de paquets de données en vérifiant en outre si les règles d'accès stockées sous la forme d'extensions de la table de groupe et/ou de la table de mesure permettent d'ajouter la nouvelle règle de réacheminement de paquets de données à l'ensemble de règles de réacheminement de paquets de données, dans le cas où les règles d'accès stockées sous la forme d'extensions de la table de flux permettent d'ajouter la nouvelle règle de réacheminement de paquets de données à l'ensemble de règles de réacheminement de paquets de données.

8. Unité de réacheminement de paquets de données (202) selon l'une quelconque des revendications précédentes, l'ensemble de règles d'accès définissant, pour une règle de réacheminement de paquets de données respective de l'ensemble de règles de réacheminement de paquets de données,
une entité de commande en tant que propriétaire de la règle de réacheminement de paquets de données respective,
d'autres entités de commande, qui sont autorisées à accéder à la règle de réacheminement de paquets de données respective,
et/ou
des droits d'accès des autres entités de commande, qui sont autorisées à accéder à la règle de réacheminement de paquets de données respective.

9. Unité de réacheminement de paquets de données (202) selon la revendication 8, l'unité de réacheminement de paquets de données (202) étant configurée pour recevoir le message de commande de SDN en provenance d'un dispositif de commande de SDN (208a-c) pour créer une nouvelle règle de réacheminement de paquets de données de l'ensemble de règles de réacheminement de paquets de données et l'entité de commande d'accès (202a) étant configurée pour extraire un identifiant à partir du message de commande de SDN, qui identifie une entité de commande comme étant le propriétaire de la nouvelle règle de réacheminement de paquets de données.

10. Unité de réacheminement de paquets de données (202) selon la revendication 9, l'entité de commande d'accès (202) étant configurée pour décider si une nouvelle règle de réacheminement de paquets de données doit être ajoutée à l'ensemble de règles de réacheminement de paquets de données ou si une règle de réacheminement de paquets de données existante doit être modifiée sur la base de l'identifiant extrait, qui identifie l'entité de commande.

11. Dispositif de commande de réseau défini par logiciel, SDN, (208a-c) configuré pour commander le réacheminement de paquets de données dans un réseau défini par logiciel en fournissant un message de commande à une unité de réacheminement de paquets de données (202), le message de commande comprenant une règle de réacheminement de paquets de données, un identifiant pour identifier une entité de commande comme étant le propriétaire de la règle de réacheminement de paquets de données et une liste d'autorisations.

12. Dispositif de commande de SDN (208a-c) selon la revendication 11, le message de commande définissant au moins une autre entité de commande, qui est autorisée à accéder à la règle de réacheminement de paquets de données, et/ou les droits d'accès de l'au moins une autre entité de commande.

13. Procédé d'exploitation d'un dispositif de commande de SDN (208a-c) configuré pour commander le réacheminement de paquets de données dans un réseau défini par logiciel sur la base d'un ensemble de règles de réacheminement de paquets de données, le procédé comprenant l'étape de :
envoi d'un message de commande à une unité de réacheminement de paquets de données(202);
le message de commande comprenant une règle de réacheminement de paquets de données, un identifiant pour identifier une entité de commande comme étant le propriétaire de la règle de réacheminement de paquets de données et une liste d'autorisations.

14. Procédé d'exploitation d'une unité de réacheminement de paquets de données (202) configurée pour réacheminer des paquets de données dans un réseau défini par logiciel sur la base d'un ensemble de règles de réacheminement de paquets de données, le procédé comprenant les étapes de :
réception d'un message de commande provenant d'une unité de réacheminement de paquets de données (202), le message de commande comprenant une règle de réacheminement de paquets de données et un identifiant pour identifier une entité de commande qui génère le message de commande ; et
commande de l'accès à l'ensemble de règles de réacheminement de paquets de données sur la base d'un ensemble de règles d'accès et de l'identifiant ;
chaque règle d'accès de l'ensemble de règles d'accès comprenant un champ de propriétaire et un champ d'autorisation dans un message de commande de réseau défini par logiciel, SDN.

15. Programme informatique comprenant un code de programme pour réaliser le procédé selon la revendication 13 ou 14, lorsqu'il est exécuté sur un ordinateur.
